# EUROPEAN PATENT SPECIFICATION

(11) **EP 1 102 926 B1**
(45) Date of publication and mention of the grant of the patent: **25.04.2007**
(21) Application number: 00932488.0
(22) Date of filing: 16.05.2000
(51) Int. Cl.: F02C 3/28

(54) **FUEL GAS TURBO-EXPANDER FOR OXYGEN BLOWN GASIFIERS AND RELATED METHOD**
BRENNGASENTSPANNUNGSTURBINE FÜR EINEN SAUERSTOFFAUFBLAS-VERGASER UND ZUGEHÖRIGES VERFAHREN
TURBODETENDEUR MODIFIE DE GAZ COMBUSTIBLE, DESTINE A DES GAZOGENES A OXYGENE PULSE, ET PROCEDE ASSOCIE

(30) Priority: 03.06.1999 US 325174
(43) Date of publication of application: 30.05.2001
(73) Proprietor: GENERAL ELECTRIC COMPANY, Schenectady, NY 12345 (US)
(72) Inventor: STATS, David, Andrew, Clifton Park, NY 12065 (US)
(74) Representative: Pedder, James Cuthbert
(86) International application number: PCT/US2000/013443
(87) International publication number: WO 2000/075499

(56) References cited:
- EP-A- 0 934 904
- EP-A- 0 950 637
- WO-A-97/39235
- WO-A-99/14473
- GB-A- 2 191 215
- US-A- 4 549 396
- US-A- 4 999 993

## Description

### BACKGROUND OF THE INVENTION

This invention relates to gas turbines in general, and to integrated coal gasification combined cycle systems in particular.

Integrated gasification combined cycle systems provide flexible operating systems which bum coal in an environmentally acceptable manner.

### Some such systems include:-

WO99-14473 discloses a synthesis gas expander located immediately upstream of combustion turbine. The invention improves the reliability of burning a synthesis gas as fuel for a combustion turbine to produce power by incorporating a synthesis gas expander immediately upstream of the combustion turbine. Increased efficiency occurs from additional power output from the expander and by reduction or elimination of nitrogen compression from an air separation unit for the control of oxides of nitrogen.

WO97-39235 discloses synergistic integration of physical solvent AGR with plants using gasification. The gasification portion of an IGCC plant has a desulphurization unit which produces a clean gas which is expanded to provide refrigeration to the desulphurization unit. Preferred embodiments include an intervening process unit which comprises a membrane separator, synthesis unit, or a heat exchanger with cold nitrogen expanded downstream of an air separation unit.

The conventional steam turbine process is employed for producing electricity from hard coal. However, improvements of the efficiency are limited by material properties and operational requirements. Hard coal power generating plants, to be run in the medium or upper load range, must satisfy the requirements for a good load behavior. This necessitates keeping live steam states in the conventional range of temperatures from about 540 to 560°C and maintaining a supercritical pressure. A significant improvement of the process can be achieved only when the conditions of the Combi process used in power generating plants fueled with natural gas or oil can also be utilized for producing electricity from hard coal. However, complete or at least partial gasification of the coal is necessary for this. Although gasification of coal as an energy conversion process involves considerable conversion losses, the efficiency of the Combi process is so favorable that these losses are not only compensated but are overcompensated. Weinzierl, K., "Gasification of coal to improve efficiency in the power generating plant: The VEW Coal conversion method in comparison to alternative solutions," VGB KRAFTWERKSTECHNIK, Vol. 62, No. 5, pp. 365 - 379 May 1982.

Such systems typically incorporate air blown or oxygen blown gasifiers. For oxygen blown gasifiers, the gasifier optimum pressure is much higher than the fuel pressure required by the gas turbine. In the case of air blown gasifiers, when the power isprovided by a motor tocompress air for the gasifier, the power requirement lowers the overall plant power output. In the case of oxygen blown gasifiers, power is recovered by installing a power recovery turbine, or turbo expander, in the fuel gas stream and increasing the inlet temperature indirectly using heatexchangers. Additional power is recovered by adding a combustor to the expander, and letting the pressure downthrough the expander and using the power output of the expander to drive a generator or otherload.

More specifically, effluent gas from the gasifier is either cooled in a two train syngascooler (a radiant coolerfollowed by a convention cooler) or in a quench cooler where water is injected into the cooler. The fuel gas is further treated to remove particulatematerial. A turbo expander is included to reduce the gas pressure to gas turbine operating pressure, and to recover useful power.Typically, the temperature before the expander needs to be elevated above thecooled temperature for particulate removal and useful heat removal. This has been accomplished in the past by use of heat exchangers and to some extent by including a shift reactor to raise the temperature.

### BRIEF SUMMARY OF THE INVENTION

In this invention, a combustor is added upstream of the turbo expander, and a small amount of oxygen is added to the combustor in order to increase the power output of the expander, thereby increasing the amount of useful work, but not adding significantly to the complexity of the system.

The reduced pressure fuel gas is then cooled and passed through asulfur removal system, heated and then supplied to the gas turbine.

According to a first aspect of the invention, there is provided a power generating plant including a gas turbine which utilizes fuel gas from an oxygen blown gasifier for combustion at a predetermined pressure to drive a primary load, and where the fuel gas supplied from said gasifier is at a pressure higher than the predetermined pressure, the invention characterized in an arrangement to decrease the pressure of said fuel gas to a lower pressure required by the gas turbine comprising a combustor and an expander (48) downstream of said combustor, said combustor and said expander located between said gasifier and said gas turbine; said plant further comprising a steam turbine and a heat recovery steam generator where spent steam from the steam turbine is reheated in the heat recovery steam generator by exhaust heat from the gas turbine and a sulphur removing unit downstream of the expander, the sulphur removing unit returning the fuel gas to a heating unit which heats the fuel gas.

### BRIEF DESCRIPTION OF THE DRAWINGS

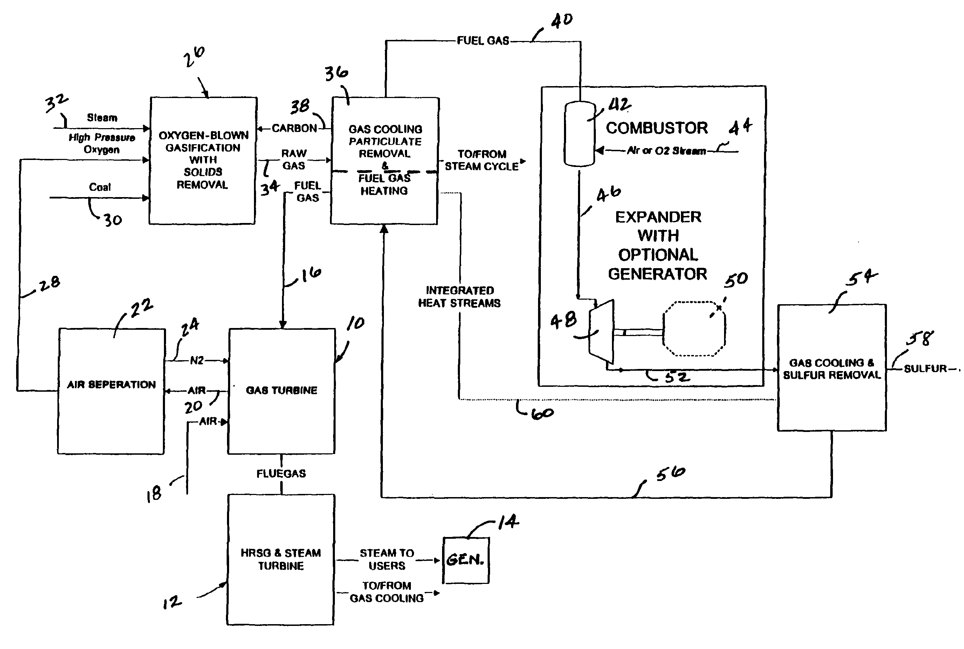

The single drawing figure is a schematic flow diagram of an oxygen blown gasifier incorporated within a combined cycle system.

### DETAILED DESCRIPTION OF THE INVENTION

With reference to the Figure, an integrated gasification combined-cycle (IGCC) system inclues a gas turbine 10, the exhaust gas of which is used to heat steam in a heat recovery steam generator (HRSG) for a steam turbine, the combined HRSG and steam turbine indicated at 12. The steam turbine typically drives a generator 14 for producing, for example, electric power.

The gas turbine 10 is supplied with fuel gas via line 16 and air via line 18. Air is extracted from the gas turbine compressor via line 20 and supplied to air separator 22, with N2 returned to the gas turbine via line 24, and high pressure oxygen supplied to the gasification/soiids removal unit or gasifier 26 via line 28. TheN2 supplied to the gas turbine also increases the turbine output. Gasification/solids removal unit 26 receivescoal from line 30 and steam from line 32,along with the high pressure oxygen in line 28. Raw gas exits unit 26 via line 34 and is supplied to the gascooling/particulate removal and fuel gas heating unit 36. In unit 36, particulate removal results in carbon being recycled to the gasification unit via line 38.

Because the gasifier optimum pressure is much higher than required for the gas turbine fuel pressure, the fuel gas exits unit 36 and is supplied to combustor 42 via line 40, where the fuel gas is mixed with a stream of air or O₂ via line 44. The resultant combustion gases are supplied via line 46 to a turbo expander 48 where the gas is reduced to gas turbine operating pressure, and useful power is used to drive an optional generator 50 or other load. The amount of air or O₂ supplied to the combustor will vary, depending on the desired power output from the expander. The expanded fuel is supplied via line 52 to a gas cooling/sulfur removal unit 54, with cooled fuel gas returning to the fuel gas heating section of unit 36 via line 56, and sulfur recovered via line 58.

Fuel gas at lower pressure, i.e., at gas turbine operating pressure, is heated to the desired inlet temperature, and then supplied to the gas turbine 10 via line 16.

A conventional (and optional) integrated heat stream is also in place, as indicated by line 60 which extends between the fuel gas heating section of unit 36 and the gas cooling and sulfur removal unit 54.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A power generating plant including:
a gas turbine (10) which utilizes fuel gas from an oxygen blown gasifier (26) for combustion at a predetermined pressure to drive a primary load (50), and where the fuel gas supplied from said gasifier (26) is at a pressure higher than the predetermined pressure; an arrangement to decrease the pressure of said fuel gas to a lower pressure required by the gas turbine comprising a combustor (42) and an expander (48) downstream of said combustor, said combustor and said expander located between said gasifier and said gas turbine (10); said plant further comprising a steam turbine and a heat recovery steam generator (12) where spent steam from the steam turbine is reheated in the heat recovery steam generator by exhaust heat from the gas turbine (10) and a sulphur removing unit (54) downstream of the expander, the sulphur removing unit returning the fuel gas to a heating unit (36) which heats the fuel gas.

2. The plant according to claim 1 wherein said expander (48) drives a generator (50).

3. The plant according to claim 1 including means for supplying gas exiting the expander (16, 56) to said gas turbine (10).

4. The plant according to claim 1 wherein fuel gas entering the combustor (42) is supplied by said oxygen blown gasifier (26), with a gas cooling and particulate removal unit (36) located between the gasifier (26) and the combustor (42).

5. The plant according to claim 1 including an air separation unit (22) exchanging N2 and air with said gas turbine (10).

6. The plant of claim 5 wherein oxygen from said air separation unit (22) is supplied to said gasifier (26).

7. The plant of claim 1 including means for supplying air or oxygen (44) to said combustor (42).

## Patentansprüche

1. Kraftwerksanlage, die Folgendes aufweist:
eine Gasturbine (10), die Brenngas aus einem sauerstoffgespeisten Vergaser (26) zur Verbrennung bei einem festgelegten Druck nutzt, um eine primäre Last (50) anzutreiben, und bei welcher der Druck des von dem Vergaser (26) zugeführten Brenngases höher als der festgelegte Druck ist; eine Anordnung zum Absenken des Brenngasdrucks auf einen niedrigeren, von der Gasturbine benötigten Druck, umfassend einen Brenner (42) und einen Expander (48) stromabwärts von dem Brenner, wobei der Brenner und der Expander zwischen dem Vergaser und der Gasturbine (10) angeordnet sind; wobei die Anlage ferner eine Dampfturbine und einen Wärmerückgewinnungs-Dampfgenerator (12), in dem verbrauchter Dampf aus der Dampfturbine durch Abgaswärme von der Gasturbine (10) erneut erwärmt wird, sowie eine stromabwärts von dem Expander angeordnete Entschwefelungseinheit (54) umfasst, wobei die Entschwefelungseinheit das Brenngas in eine Erwärmungseinheit (36) zurückführt, welche das Brenngas erwärmt.

2. Anlage nach Anspruch 1, wobei der Expander (48) einen Generator (50) antreibt.

3. Anlage nach Anspruch 1 einschließlich Mitteln, um aus dem Expander (16, 56) austretendes Gas der Gasturbine (10) zuzuführen.

4. Anlage nach Anspruch 1, wobei das in den Brenner (42) strömende Brenngas von dem sauerstoffgespeisten Vergaser (26) zugeführt wird, mit zwischen dem Vergaser (26) und dem Brenner (42) angeordneten Gaskühlungs- und Partikelfiltereinheit (36).

5. Anlage nach Anspruch 1 mit einer Luftzerlegungseinheit (22), die Stickstoff (N₂) und Luft mit der Gasturbine (10) austauschen.

6. Anlage nach Anspruch 5, wobei Sauerstoff aus der Luftzerlegungseinheit (22) dem Vergaser (26) zugeführt wird.

7. Anlage nach Anspruch 1 einschließlich Mitteln zum Zuführen von Luft oder Sauerstoff (44) zu dem Brenner (42).

## Revendications

1. Centrale de production d'énergie comprenant :
une turbine à gaz (10) qui utilise du gaz combustible à partir d'un gazogène à oxygène pulsé (26) pour une combustion à une pression prédéterminée pour conduire une charge primaire (50), et où le gaz combustible fourni à partir dudit gazogène (26) est à une pression supérieure que la pression prédéterminée : un agencement pour diminuer la pression dudit gaz combustible à une pression plus faible requise par la turbine à gaz comprenant une chambre de combustion (42) et un expanseur (48) en aval de ladite chambre de combustion, ladite chambre de combustion et ledit expanseur situés entre ledit gazogène et ladite turbine à gaz (10) ; ladite centrale comprenant en outre une turbine à vapeur et un générateur de vapeur à récupération de chaleur spécialisé (12) où la vapeur utilisée à partir de la turbine à vapeur est réchauffée dans le générateur de vapeur à récupération de chaleur par de la chaleur d'échappement en provenance de la turbine à gaz 10) et une unité d'évacuation de soufre (54) en aval de l'expanseur, l'unité d'évacuation de soufre restituant le gaz combustible à une unité de chauffage (36) qui chauffe le gaz combustible.

2. Centrale selon la revendication 1, dans laquelle ledit expanseur (48) entraine un générateur (50).

3. Centrale selon la revendication 1, comprenant un moyen pour fournir du gaz sortant de l'expanseur (16, 56) vers ladite turbine à gaz (10).

4. Centrale selon la revendication 1, dans laquelle le gaz combustible entrant dans la chambre de combustion (42) est fourni par ledit gazogène à oxygène pulsé (26), avec un refroidissement de gaz et une unité d'évacuation de particules (36) situés entre le gazogène (26) et la chambre de combustion (42).

5. Centrale selon la revendication 1, comprenant une unité de séparation d'air (22) échangeant le N2 et l'air avec ladite turbine à gaz (10).

6. Centrale selon la revendication 5, dans laquelle l'oxygène à partir d'une unité de séparation d'air (22) est fourni audit gazogène (26).

7. Centrale selon la revendication 1 comprenant un moyen pour fournir de l'air ou de l'oxygène (44) à ladite chambre de combustion (42).
